# EUROPÄISCHE PATENTSCHRIFT

(11) **EP 3 821 189 B1**
(45) Veröffentlichungstag und Bekanntmachung des Hinweises auf die Patenterteilung: **23.03.2022**
(21) Anmeldenummer: 19739578.3
(22) Anmeldetag: 10.07.2019
(51) Int. Cl.: F27B 1/02, C04B 2/12

(54) **VERFAHREN UND VORRICHTUNG ZUM BEARBEITEN VON STÜCKIGEM, MINERALISCHEM GUT**
METHOD AND DEVICE FOR PROCESSING FRAGMENTED, MINERAL MATERIAL
PROCÉDÉ ET DISPOSITIF D'USINAGE D'UN MATÉRIAU MINÉRAL EN MORCEAUX

(30) Priorität: 12.07.2018 DE 102018116917
(43) Veröffentlichungstag der Anmeldung: 19.05.2021
(73) Patentinhaber: Ommerborn, Thorsten, 45470 Mülheim (DE)
(72) Erfinder: KEHSE, Georg, 41464 Neuss (DE); OMMERBORN, Thorsten, 45470 Mülheim (DE)
(74) Vertreter: HGF
(86) Internationale Anmeldenummer: PCT/EP2019/068632
(87) Internationale Veröffentlichungsnummer: WO 2020/011898

(56) Entgegenhaltungen:
- EP-B1- 1 634 026
- AT-B- 390 248
- DE-A1- 3 038 927
- JP-U- S56 173 637

## Beschreibung

Die Erfindung betrifft eine Vorrichtung zum thermischen Behandeln von mineralischem, stückigem Gut und insbesondere um einen Gleichstrom-Gegenstrom-Regenerativofen zum Brennen von Kalkstein, dolomitischem Kalkstein und Dolomit.

Das GGR-Ofenprinzip wurde in den 1950er-Jahren bei den Wopfinger-Kalkwerken entwickelt und ist insbesondere in der DE 23 17 303 beschrieben.

Hierbei handelt es sich um einen Drei-Schacht-Ofen zum Brennen von stückigem Gut, bestehend aus gleichen, im Querschnitt kreisförmigen oder vieleckigen Schächten, die unter Winkeln von 60° angeordnet sind und von denen periodisch jeweils ein Schacht im Gleichstrom mit dem niedergehenden Gut mit Brennstoff beheizt wird (Brennschacht), während die Abgase dieses Schachtes durch die beiden anderen, parallel geschalteten, jeweils unbeheizten Schächte im Gegenstrom abziehen (Regenerativschächte), wobei jeder Schacht im Bereich zwischen Brennzone und Kühlzone einen Ringkanal aufweist, die Ringkanäle untereinander auf gleichem Niveau liegen und durch Stichkanäle verbunden sind, wobei jeder Ringkanal eines Schachtes durch je einen ständig offenen Stichkanal mit jedem der beiden anderen Schächte verbunden ist und die Lage der Stichkanäle den Seiten eines Dreiecks entspricht.

Dem entsprechend wird somit im ersten Schacht mit der Bewegungsrichtung des stückigen Guts Brennstoff und Verbrennungsluft hindurchgeführt. Im unteren Bereich des Schachtofens verbreitert sich dieser zur Kühlzone, wobei durch die Verbreiterung eine umlaufende Böschung des stückigen Guts entsteht, aus der die heißen Rauchgase austreten. Oberhalb der Böschung ist der jeweilige Überstromkanal als integraler Bestandteil des Schachtes ausgebildet und führt von dort die Gase in die anderen zwei Schächte, in denen diese in Richtung der Gutaufgabe nach oben abziehen.

Im Gegensatz zu dem in der DE 23 17 303 beschriebenen Drei-Schacht-Ofen bestehen die heutigen GGR-Öfen standardmäßig aus zwei Schächten, bei denen abwechselnd der eine Schacht als Brennschacht und der andere als sogenannter Regenerativschacht genutzt wird.

Die Zeit, in der die Schächte diese unterschiedliche Funktion haben, wird als Zykluszeit bezeichnet. Sie ist prinzipiell frei wählbar und ist ein verfahrenstechnischer Parameter der Ofenfahrweise. Das Umschalten von Brenn- auf Regenerativschacht wird als Umsteuerperiode bezeichnet.

Der GGR-Ofen ist ein Druckofen. Im Brennschacht wird daher Verbrennungsluft unter Druck dem Ofen am Ofenkopf zugeführt. Diese nimmt dann in der sogenannten Vorwärmzone die Wärme von der Kalksteinschüttung auf, die in der vorherigen Zykluszeit (Funktion: Regenerativschacht) frisch zugeführt und durch das Ofenabgas vorgewärmt wurde. Der Brennstoff wird über eine Anzahl über dem Ofenquerschnitt verteilten Lanzen in Bewegungsrichtung des stückigen Gutes zugeführt. Die Vorwärmzone endet am unteren Ende der Lanze. Als Brennstoff werden Brenngase (Erdgas, Koskofengas, etc.) oder staubförmige Festbrennstoffe (Feinbraunkohle, Steinkohle) aber auch flüssige (Schwer- und Leichtöle) eingesetzt. Die Zuführung der staubförmigen Brennstoffe erfolgt mit Transportluft, die einerseits die Aufgabe des Brennstofftransportes und andererseits die der Lanzenkühlung hat. Die Verbrennungsluftmenge ist entsprechend um die Transportluftmenge zu reduzieren, damit letztendlich das Luft-Brennstoffverhältnis eingehalten wird.

Am unteren Ende der Lanzen endet die Vorwärmzone und die Brennzone beginnt, in der einerseits durch die Verbrennung des Brennstoffs die Prozesswärme für die thermische Behandlung des stückigen Gutes zur Verfügung gestellt und andererseits das stückige Gut thermisch behandelt wird. Bei diesem Kalzinierungsprozess wird der Kalkstein zu Kalk umgewandelt, bei dem Kohlendioxidgase frei gesetzt werden, die dann Bestandteil des Abgases bzw. des Prozessgases sind. Die Flamme steht im direkten Kontakt mit dem Brenngut. Die Brennzone endet, wenn die erzeugte Prozesswärme nicht mehr ausreicht, um die thermische Behandlung des stückigen Gutes aufrecht zu erhalten.

Die Strömung in der Vorwärm- und Brennzone erfolgt im Gleichstrom von Prozessgasen und Brenngut. In der Kühlzone wird im Gegenstrom vom Brenngutaustrag Kühlluft unter Druck dem Ofen zugeführt. Das Prozessgas und die vom Gutaustrag zugeführte Kühlluft werden innerhalb des Ofens gemeinsam über einen Ringkanal und Überströmkanal (Verbindungskanal zum zweiten Schacht) in den Regenerativschacht geführt, die zwischen Brenn- und Kühlzone sich befinden.

Im klassischen GGR-Ofen wird der Ringkanal durch einen Innenschacht-, einen Außenschacht-, und ein Deckenmauerwerk gebildet. Hierbei wird das Innenschachtmauerwerk entweder auf zentrisch ausgerichtete Mauerwerkspfeiler gelagert (Pfeilerofen) oder mittels eines gekühlten doppelwandigen Stahlzylinders hängend montiert (Ofen mit hängendem Zylinder).

Die aus dem Überströmkanal austretenden Gase vereinigen sich im Regenerativschacht mit der Gutkühlluft aus dem genannten Schacht sowie weiter oben in diesem Schacht mit der Lanzenkühlluft. Das entstandene Gesamtgas durchströmt die in der Umsteuerperiode frisch zugeführte Steinschüttung im Gegenstrom und gibt ihre Wärme an die Steinschüttung ab.

Aufgrund der regenerativen Wärmerückgewinnung weisen diese GGR-Öfen in der Regel die niedrigsten Energieverbräuche auf und sind weit verbreitet.

Aus der AT 382955 B ist eine Weiterbildung eines GGR-Schachtofens bekannt. Bei diesem GGR-Ofen ist wie bei bekannten GGR-Öfen eine Ringkammer um die Schächte herum integral angemauert. Hierdurch ist der Innenschacht zylindrisch ausgebildet, jedoch ist der Außenschacht hierbei aufwändig ausgebildet und nicht zylindrisch ausgebildet. Das Pfeilermauerwerk, welches bei bekannten GGR-Öfen innen angeordnet ist, ist bei dieser Ausführungsform quasi nach außen verlegt bzw. ein Teil der Öffnungen, die im Ofenmantel bzw. im Bereich der Ringkammer angeordnet sind. Durch die Anordnung des Pfeilermauerwerks in den Ringkammern wird es bei dieser Ausführungsform möglich, den eigentlichen Brennschacht als glatten Innenzylinder auszubilden, der äußere Aufbau wird jedoch erheblich verkompliziert und zudem werden die bekannten Nachteile von Pfeilermauerwerken nicht verhindert. Auch bei dieser Ausführungsform sind die Ringkammern und der Überstromkanal integraler Bestandteil des gemauerten Brennschachtes. Die in herkömmlichen GGR-Öfen eingesetzten sich nach unten verjüngenden Pfeiler, die das obere Schacht-Mauerwerk tragen, sind bei diesem Konzept ebenfalls erhalten. Sie weisen lediglich zum Schacht eine lotrechte Geometrie auf, wodurch sie weiterhin der dreiseitig anliegenden thermischen Beanspruchung und dem mechanischen Stress durch vertikale Dehnung das Gewicht der Kalksteinschüttung sowie des Eigengewichtes des Oberschachtes erfahren. Die Abgasführung bei der Ausführungsform gemäß der AT 382955 B ist die gleiche wie bei einem herkömmlichen GGR-Ofen, wodurch es zu Strömungsschatten und Verwirbelungen kommt. Derartige Strömungs- und Verwirbelungsschatten führen zu Staub- und Ascheablagerungen, die nachteilig sind.

Aus der AT 390 248 B ist ein konventioneller Schachtoffen bekannt, welcher zwei parallel zueinander angeordnete Schächte aufweist. Die Schächte umfassen eine Vorwärmzone, eine Brennzone, eine Kühlzone und eine Ringzone. Die Ringzone bzw. die Ringkammer ist ein integraler Bestandteil des Ofens und ist fest an die Schächten angemauert. Unten in der Kühlzone weist der Schachtofen eine Aufweitung im Querschnitt auf.

Aus der JP S56 173637 U ist Schachtofen mit zwei Schächten bekannt. Der Ofen ist derart ausgebildet, dass die Schächte im Querschnitt von unten nach oben enger werden. Im mittleren Bereich weisen die Schächte eine Aufweitung und eine Ringkammer auf.

Bei pfeilergestützten GGR-Öfen ist von Nachteil, dass das Pfeilermauerwerk dreiseitig hohen Temperaturen ausgesetzt ist. Durch die entsprechende Ofenfahrweise bedingten Temperaturwechselbeanspruchungen und durch die massive Auflast des Innenschachtes kommt es zu Rissen im Pfeiler und schlussendlich zum Versagen der Ausmauerung. Zudem ist das Innenzylindermauerwerk, das sog. Arbeitsfutter, hohen Drucklasten durch das Brenngut, nämlich der Kalkstein-/Kalkschüttung, ausgesetzt. Dies führt oftmals zum Verschieben des Mauerwerkes nach außen und zu direktem Einströmen von Gasen innerhalb der Brennzone in den den Innenzylinder umgebenden Ringkanal. In beiden Fällen ist kein geregelter Brennbetrieb mehr möglich und führt zum Abstellen des Ofens. Dieses Problem tritt auch bei dem Ofen nach AT 382955 B auf.

Des Weiteren ist der spezifische Bedarf an feuerfestem Material in Bezug auf die Ofenkapazität sehr hoch. Die Instandhaltungskosten sind beim Versagen des Mauerwerkes außerordentlich hoch.

Bei GGR-Öfen mit hängendem Innenzylinder ist von Nachteil, dass für das Tragen des Mauerwerks des Innenzylinders ein sehr hoher technischer Aufwand betrieben werden muss. Es muss ein doppelwandiger Stahlzylinder mit Luft- oder Flüssigkeitskühlung vorgesehen werden, der ununterbrochen mit Kühlmedium durchströmt werden muss, um die Wärmeenergie, die das Mauerwerk aufnimmt, gezielt abzuführen.

Damit wird dem eigentlichen Prozess Wärme entzogen, was nachteilig ist. Zudem muss das Kühlmedium durch entsprechend leistungsfähige Gebläse oder Pumpen zugeführt werden, was wiederum den Energieverbrauch erhöht.

Zudem ist das Problem des unteren Mauerwerkabschlusses bzw. des Abschlusses im Zylinderfuß noch immer nicht zufriedenstellend gelöst. Dies senkt die Einsatzbereitschaft des Ofens und somit die Produktivität, da es sehr häufig zu Schäden in diesem Bereich kommt, die zu ungeplanten Stillständen führen.

Beide GGR-Ofentypen haben gemeinsam, dass sie einen nahezu rechteckigen Querschnitt im Ringkanal aufweisen. Wie bereits auch schon in DE 23 17 303 A angedeutet, besteht bei derartigen Öfen ein massives Problem dadurch, dass sich Stäube aus dem Gasstrom ablagern und bei rechteckigen Kanälen in Strömungsschatten ablagern können, wobei diese aufwändig von Hand mittels Pressluft oder Wasser in regelmäßigen Abständen entfernt werden müssen. Insbesondere bei alkalihaltigen Stäuben führt das auch dazu, dass diese mit der Ausmauerung stark versintern. Zudem wird beim häufig angewendeten Reinigen des feuerfesten Materials insbesondere mit Wasser dieses stark angegriffen, was wiederum den Verschleiß und damit die Instandhaltungskosten erhöht.

Die üblicherweise für derartige Öfen verwendeten Ausmauerungen sind sogenannte Magnesiasteine, die aus üblicherweise hoch-reinem Magnesiumoxid bestehen, welches entsprechend gesintert ist. Dies hat jedoch den Nachteil, dass es bei Vorhandensein von Wasser der Magnesiastein hydratisieren kann und damit zerstört wird.

Aufgabe der Erfindung ist es, ein Aggregat zum Brennen von mineralischem, stückigem Gut zu schaffen, was gegenüber bekannten GGR-Ofentypen erheblich einfacher aufgebaut ist, erheblich wartungsfreundlicher ist und sowohl in der Erstellung als auch im Betrieb wirtschaftlicher ist.

Die Aufgabe wird mit einer Vorrichtung mit den Merkmalen des Anspruchs 1 gelöst.

Vorteilhafte Weiterbildungen sind in Unteransprüchen gekennzeichnet.

Es ist eine weitere Aufgabe, ein Verfahren zum Betreiben einer Vorrichtung zum Brennen von mineralischem, stückigem Gut zu schaffen, welches einfacher und günstiger ist als bekannte Verfahren.

Die Aufgabe wird mit den Merkmalen des Anspruchs 17 gelöst.

Erfindungsgemäß wird eine Vorrichtung zum Brennen von stückigem, mineralischem Gut und insbesondere ein GGR-Ofen zum Brennen von Kalkstein aus zumindest zwei Schächten ausgebildet.

Die Schächte können hierbei zylindrisch, viereckig oder mehreckig im Querschnitt ausgebildet sein.

Hierbei ist für die Schächte kennzeichnend, dass diese vom Aufgabebereich bis zum Austragsbereich des stückigen Gutes mit einem durchgehend gleichen Ofenquerschnitt ausgebildet sind, so dass die für herkömmliche GGR-Öfen übliche Erweiterung, egal ob es sich um einen Pfeilerofen oder einen hängenden Zylinderofen handelt, nicht vorhanden ist.

Bei einer weiteren vorteilhaften Ausführungsform kann aber auch eine konische Bauform bzw. Aufweitung unterhalb der Abgasschächte angewendet werden, insbesondere um die Durchbrechung von Verschmutzungen freizuhalten.

Auch ein Pfeilermauerwerk, bei dem die Pfeiler zum Schacht hin lotrecht ausgebildet sind, aber nach außen zu einem Ringkanal oder einer Ringkammer hin gemauert sind, wird bei der Erfindung nicht eingesetzt.

Erfindungsgemäß werden bei der Erfindung der insbesondere angemauerte Ring- und Überströmkanal durch außenliegende Abgaskanäle ersetzt. Die Ring- und Überströmkanäle nach der Erfindung sind keine integralen Bestandteile der Brenn- und Regenerativschächte und werden von außen an einfachere Durchbrechungen der Zylindermantelwandung angesetzt ohne mit diesen vermauert oder in anderer Weise unlösbar verbunden zu sein.

Vorzugsweise stützen sich die Überströmkanäle bzw. die Abgasschächte nach der Erfindung mit einer eigenen Tragstruktur am Stahlmantel des Ofens - jedoch nicht am Mauerwerk - ab, wobei insbesondere eine schwimmende Lagerung der Ringkanäle auf die Tragstruktur vorgesehen ist, um Wärmedehnungen auszugleichen.

Von außen betrachtet stellen diese Kanäle quasi von außen aufgesetzte "Ringwulste" dar. Diese Ringwulste bzw. diese Ringkanäle sind im Gegensatz zum Stand der Technik aber nicht integraler Bestandteil des Ofen-Brennraumes.

Durch die Verlagerung der Ring- und Überströmkanäle außerhalb der Schächte und das Vorsehen dieser Funktionseinheit als getrennte Bauteile und insbesondere außerhalb der Tragstruktur der Schächte ergibt sich eine Vielzahl von Vorteilen.

Einerseits kann der Schacht von der Aufgabezone bis zur Austragszone des Gutes durchgehend innen wie außen mit gleichem Ofenquerschnitt ausgeführt werden. Dies senkt das spezifische Gewicht der Ausmauerung in Bezug auf die Ofenkapazität und verbessert die Ofenstatik wesentlich.

Insbesondere bei einer zylinderförmigen Ausbildung sind die mechanischen Belastungen der Ausmauerung durch das Brenngut geringer, wodurch die Lebenszeit der Ausmauerung stark erhöht wird.

Der Einbau von Sonderformaten in der feuerfesten Ausmauerung wird deutlich reduziert, was die Kosten pro Tonne feuerfesten Materials senkt. Durch den Einsatz von Standardformaten wird die Verfügbarkeit der feuerfesten Materialien im Revisionsfall deutlich gesteigert. Sonderformate für innen oder außen angeordnete Pfeiler sind nicht notwendig.

Der Aufbau des Ofens ist erheblich leichter zu bewerkstelligen, da keine komplizierten Einbauten, wie Pfeiler und ähnliche Tragstrukturen, berücksichtigt werden müssen.

Der Wärmeverlust des erfindungsgemäßen Ofens kann deutlich geringer als beim klassischen GGR-Ofen sein:
Die Zugänge aus dem Ofenschacht zu dem außen liegenden Ringkanal können im Querschnitt und in der Lage den Strömungsverhältnissen im Ofen angepasst und optimiert werden. Hierdurch wird die Gaszuleitung in den Regenerativschacht optimiert und führt dort zu einer homogeneren Wärmeverteilung im Ofenquerschnitt. Die in dem zylindrischen Schachtmauerwerk angeordneten Öffnungen beeinflussen die Statik des Schachtmauerwerkes im Gegensatz zu Pfeilern nicht.

Der außen liegende Ringkanal kann zudem in Segmenten vorgefertigt werden und im Bedarfsfall partiell ausgetauscht werden, ohne ggf. den Ofen abfahren zu müssen. Hierbei kann die Innenauskleidung des Ringkanals auch aus Material gefertigt werden, was den Reinigungsbeanspruchungen, insbesondere bei Verwendung von Wasser besser standhält. Hierbei kann es sich um mineralische Ausmauerungen handeln, gegebenenfalls sind aber auch hochwarmfeste Metalle denkbar.

Zudem kann die Querschnittsgeometrie des Ringkanals strömungsmäßig so gestaltet werden, dass eine optimierte Durchmischung von Brennabgasen und Kalkkühlluft sichergestellt wird, wodurch die Neigung zur Staubablagerung durch Vermeidung von Strömungsschatten verringert wird, da die Strömung aufgrund der einheitlichen Geometrie eine Konstanz aufweist, was die Häufigkeit der Reinigung verringert.

Ferner können innerhalb des Ringkanals technische Maßnahmen integriert werden, um Schadstoffemission des Ofens zu reduzieren, beispielsweise durch gezielte Zugabe von entsprechenden Medien oder Ingredienzien.

Durch den erheblich vereinfachten Aufbau werden auch die Kosten für notwendige Stahlbauarbeiten deutlich reduziert.

Darüber hinaus ergibt die erfindungsgemäße Anordnung von Ringkanälen auch die Möglichkeit, zwei herkömmliche, nebeneinander liegende Normalschachtöfen zu einem GGR-Ofen umzubauen.

Die Erfindung betrifft somit eine Vorrichtung zum thermischen Behandeln von mineralischem, stückigem Gut, insbesondere zum Brennen von Kalk, wobei die Vorrichtung im Wesentlichen zumindest zwei parallel zueinander angeordnete Schächte besitzt, wobei die Schächte von einem Schachteingang bis zu einem Austrag des stückigen Gutes mit einem im Wesentlichen durchgehenden Mantel ausgebildet sind, ohne innenliegende oder außenliegende Pfeilermauerwerke oder Kanalmauerwerke oder hängende Zylinder, wobei jeder der mindestens zwei Schächte zumindest einen von außen am Mantel direkt oder über Zuführstutzen angesetzte Ringkanal besitzt, wobei die Ringkanäle außerhalb des Schachtmauerwerks angeordnet sind und keine tragende gemauerte Verbindung zum Schachtmauerwerk besitzen und kein integraler Bestandteil des Brenn- oder Regenerativschachtes sind, wobei die Ringkanäle der zumindest zwei Schächte miteinander in gasführender Verbindung stehen, wobei im Bereich der Ringkanäle Durchbrechungen vom Innenraum der Schächte zu einer Außenseite vorhanden sind und die Ringkanäle mit den Durchbrechungen in gasführender Verbindung sich befinden.

In einer Ausführungsform sind im Bereich der Durchbrechungen zwischen den Mantelwandungen und den Ringkanälen oder den die Ringkanäle und die Durchbrechungen verbindenden Rohrstutzen je Dichtungen zum gasdichten Abdichten vorhanden.

Ferner können die Ringkanäle und/oder die Rohrstutzen und/oder die Überströmkanäle einen äußeren Mantel aus einem Metall, insbesondere Stahl oder Aluminium besitzen und/oder aus einem hochwarmfesten Metall ausgebildet sein oder eine innere Auskleidung aus einem feuerfesten Material besitzen, wobei die metallischen Mäntel der Ringkanäle oder der Rohrstutzen mit dem metallischen Außenmantel, insbesondere dem Stahlmantel der Schächte verschraubt, vernietet oder verschweißt sind, oder sich eine metallische Tragstruktur der Ringkanäle an dem metallischen Außenmantel abstützt und mit diesem verbunden ist.

In einer weiteren Ausführungsform können die Ringkanäle direkt an der Mantelwandung außenseitig anliegen oder von dieser mit einem umlaufenden Ringsteg oder mit umlaufenden Abstandsstegen beabstandet sein, wobei die Durchbrechungen in dem umlaufenden Ringsteg oder den Abstandsstegen vorhanden sein, sodass eine Verbindung vom Innenraum der Schächte zu den Ringkanälen besteht.

Insbesondere ist die Vorrichtung ein Gleichstrom-Gegenstrom-Regenerativofen zum Brennen von stückigem Kalkstein, dolomitischem Kalkstein oder Dolomit.

Von Vorteil kann darüber hinaus sein, wenn die Ringkanäle über zumindest einen Überstromkanal miteinander in Verbindung stehen, wobei der Überströmkanal durch die Seitenwandungen der Ringkanäle bzw. Durchbrechungen in denselben ausgebildet wird oder bei einer Beabstandung der Ringkanäle voneinander sich zwischen den Ringkanälen als Hohlkanal erstreckt, wobei die Innenräume der Ringkanäle in den Überströmkanal münden.

Hierbei kann vorgesehen sein, dass zwei oder mehr Überströmkanäle vorhanden sind.

Bei einer möglichen Alternative können die Ringkanäle nur über einen Teilumfang an den Mantelwandungen angeordnet sein, wobei insbesondere zwei Überströmkanäle vorhanden sind, welche jeweils eine Fortsetzung des jeweiligen Ringkanals ausbilden und zwischen den Schächten parallel zueinander verlaufen und in den jeweiligen nächsten Ringkanal des benachbarten Schachts übergehen.

Hierdurch wird vorteilhafter Weise die Gasführung weiter verbessert.

Von Vorteil kann es sein, wenn die Überströmkanäle baulich und vom Querschnitt her den Ringkanälen entsprechen.

Insbesondere kann es vorgesehen sein, dass die Schächte mit ihrer Längserstreckung parallel zueinander und vertikal ausgerichtet, ausgebildet sind, wobei obere Öffnungen bzw. Aufgabebereiche der Schächte und untere Öffnungen bzw. Austragsbereiche der Schächte im Wesentlichen auf einer Höhe miteinander angeordnet sind, wobei die Mantelwandungen bezüglich ihrer radialen Ausdehnung ein- oder mehrschichtig ausgebildet sind, wobei zumindest eine feuerfeste feuerseitige Innenschicht vorhanden ist und die Schächte nach außen zumindest von einer äußeren Hülle begrenzt werden, wobei zwischen der Hülle und der feuerfesten Innenschicht weitere Schichten und insbesondere Isolierschichten angeordnet sind, wobei die Schächte Brennerlanzenanordnungen besitzen, die im Bereich einer oberen Öffnung in den Schacht axial hineinragen, wobei durch die jeweils oberen Öffnungen das stückige mineralische Gut, insbesondere Kalk aufgegeben wird und durch die unteren Öffnungen bzw. Austragsbereiche der Schächte der gebrannte Kalk abgeführt wird, wobei die Ringkanäle wulstartig um die Mantelwandungen der Schächte herum angeordnet sind.

Beispielsweise können die Ringkanäle einen runden oder länglich ovalen Querschnitt aufweisen.

Vorteilhafter Weise kann vorgesehen sein, dass die Ringkanäle aus keramischem Material gemauert oder gegossen sind oder aus einem hochwarmfesten Stahl ausgebildet sind oder eine metallische Hülle und eine keramische insbesondere feuerfeste Innenbeschichtung besitzen.

In einer Weiterbildung können die Ringkanäle mit ihrer Umfangswandung von der Hülle oder der äußeren Schicht der Mantelwandung mit einem Abstand angeordnet sein, wobei die Ringkanäle zumindest im Bereich der Durchbrechungen mit die Durchbrechungen verlängernden Kanälen oder einem entsprechenden, den Abstand einstellenden umlaufenden Ringkanal ausgebildet sind.

Vorzugsweise ist vorgesehen, dass die Durchbrechungen im Grenzbereich zwischen der Kühlzone des Schachts bzw. des Ofens und der Brennzone angeordnet sind, wobei die Kühlzone derart ausgebildet ist, dass entsprechend einer Strömungsrichtung Kühlluft durch den gebrannten Kalk hindurchströmt und in der Brennzone die Brennluft bzw. die Brenngase entsprechend der Strömungsrichtung durch den thermisch behandelten Kalk hindurchströmen, wobei im Bereich der Durchbrechungen die Kühlluft und die Brenngase sich vermischend entsprechend der Strömungsrichtung durch die Durchbrechungen durchgeleitet werden.

Weiter bevorzugt können die Kanäle bzw. die Ringkanäle bezüglich der Kühlzone leicht zur Brennzone bzw. zu oberen Öffnungen axial verschoben angeordnet sein, sodass die Strömungsrichtung der Mischgase von den Durchbrechungen in die Ringkanäle aufsteigend angeordnet ist.

Zudem betrifft die Erfindung ein Verfahren zum Betreiben einer vorbeschriebenen Vorrichtung zum thermischen Behandeln von mineralischem, stückigem Gut, insbesondere zum Betreiben eines Gleichstrom-Gegenstrom-Regenerativofen zum Brennen von Kalkstein, dolomitischem Kalkstein, Dolomit mit zumindest zwei Schächten, wobei die Schächte mit stückigem Kalkstein-/Kalkschüttung gefüllt sind und in einem ersten Schacht über die Brennerlanzenanordnung Brennstoff eingebracht, wobei Verbrennungsluft entsprechend der Strömungsrichtung durch die obere Öffnung des Schachts über Gebläse zugeführt wird und sich mit dem zu brennenden Gut bzw. dem Brennstoff aus der Brennerlanzenanordnung im Gleichstrom durch das stückige Gut bewegt, wobei Brennstoff und Brennluft sich mischen und verbrennen und die entsprechende Prozesswärme für den Umwandlungsprozess von Kalkstein zu Kalk unter Abscheidung von Kohlendioxid zur Verfügung gestellt wird, das vom Abgas aufgenommen wird, wobei am Ende einer Brennzone die Durchbrechungen in den Mantelwandungen angeordnet sind und die heißen Abgase durch die Durchbrechungen und gegebenenfalls vorhandene Kanäle in den Ringkanal geführt wird, wobei von einer unteren Öffnung bzw. einer Austragsöffnung des Schachts Kühlluft entsprechend der Strömungsrichtung nach oben zugeführt wird und im Bereich der Durchbrechungen ebenso in den Ringkanal geführt wird, wobei sich die Kühlluft mit der Brennluft bzw. dem Abgas mischt und wobei entlang des Ringkanals das Gasgemisch in den Überströmkanal und von dort über den Ringkanal und den Öffnungen in den Schacht strömt, wobei das Abgas aus den Öffnungen sich mit Kalkkühlluft über untere Öffnung bzw. einer Austragsöffnung des Schachts und mit der Lanzenkühlluft am Ende der Lanzen mischt und von dort im Gegenstrom gegen den Materialfluss des mineralischen stückigen Guts nach oben strömt und hierbei seine Wärmeenergie an das mineralische stückige Gut abgibt, wobei nach einer vorbestimmten Zeit die Prozesse in den Schächten beendet und anschließend umgekehrt werden, sodass im Schacht der Kalk gebrannt wird und im Schacht nach dem Austrag eine frische Kalksteinmenge zugeführt und in entsprechender Weise vorgewärmt wird.

Die Erfindung wird anhand einer Zeichnung beispielhaft erläutert. Es zeigen hierbei:
- Figur 1: einen erfindungsgemäßen GGR-Ofen mit einem langen Überströmkanal in einer stark schematisierten Schnittansicht;
- Figur 2: den Ofen nach Figur 1 in einem Querschnitt auf Höhe des Überströmkanals;
- Figur 3: eine weitere Ausführungsform des erfindungsgemäßen GGR-Ofens mit einem kurzen Überströmkanal;
- Figur 4: der Ofen nach Figur 3 in einem Querschnitt im Bereich des Ring- bzw. Überströmkanals;
- Figur 5: einen Querschnitt einer weiteren Ausführungsform der erfindungsgemäßen Vorrichtung, wobei zwei Ringkanäle und zwei Überströmkanäle vorhanden sind, wobei die Ringkanäle um den jeweiligen Schacht nicht geschlossen sind;

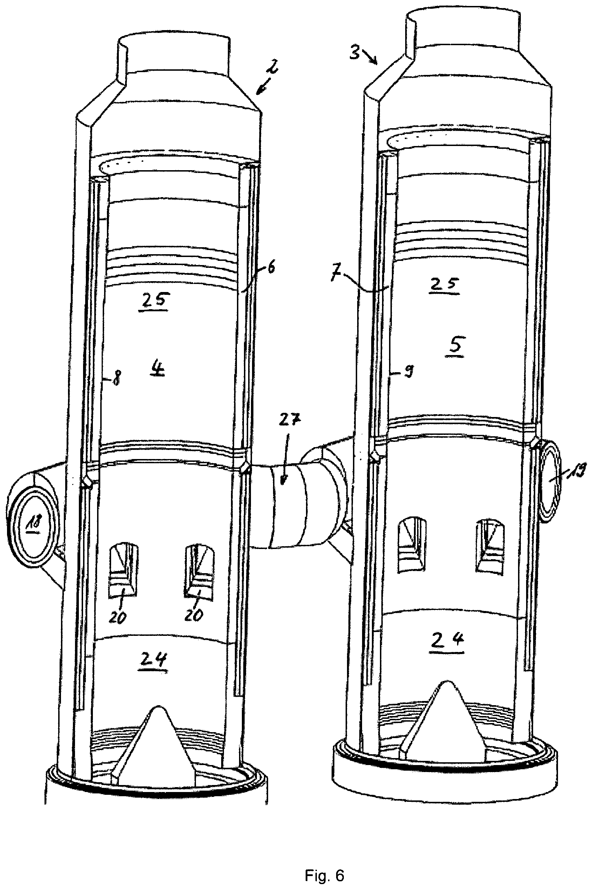

- Figur 6: eine teilgeschnittene perspektivische bildliche Ansicht der Ausführungsform nach Figur 5;

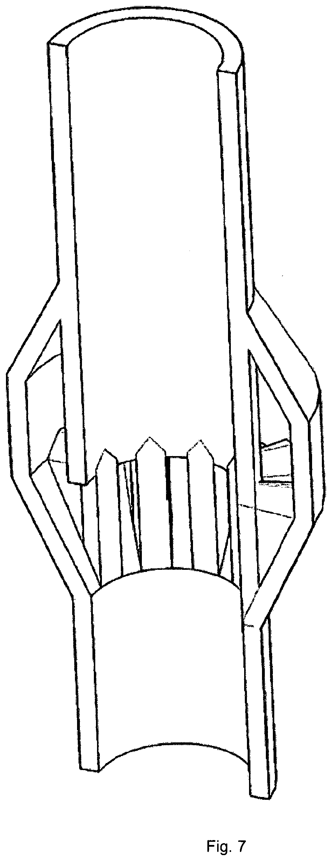

- Figur 7: eine perspektivische teilgeschnittene Ansicht eines GGR-Ofens nach dem Stand der Technik;

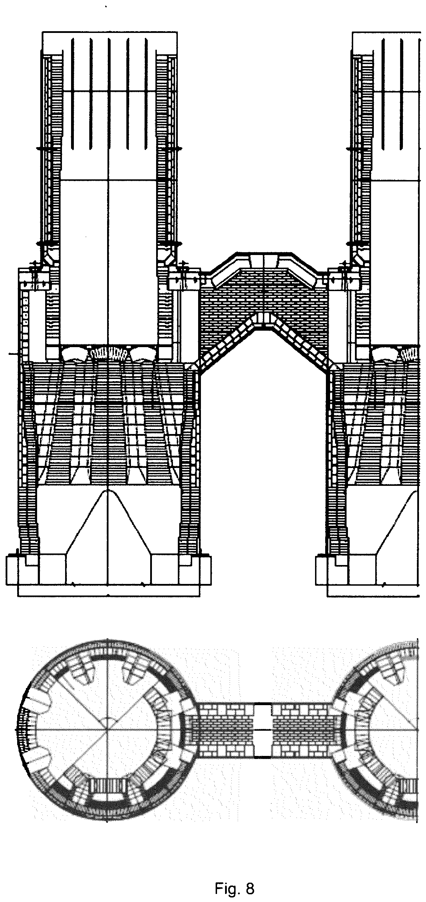

- Figur 8: eine perspektivische teilgeschnittene bildliche Ansicht eines GGR-Ofens nach dem Stand der Technik gemäß der AT 382955 B; und
- Figur 9: eine weitere erfindungsgemäße Ausführungsform.

Eine erfindungsgemäße Vorrichtung 1 zum thermischen Behandeln von mineralischem, stückigem Gut ist insbesondere ein Gleichstrom-Gegenstrom-Regenerativofen, insbesondere zum Brennen von Kalkstein, dolomitischem Kalk und Dolomit.

Die erfindungsgemäße Vorrichtung 1 besitzt hierfür mindestens zwei identische Schächte 2, 3, wobei die Schächte 2, 3 mit ihrer Längserstreckung parallel zueinander und vertikal ausgerichtet ausgebildet sind.

Die Schächte 2, 3 sind hierbei insbesondere - aber nicht notwendiger Weise - zylindrische Schächte, gleicher Höhe, die ober- und unterseitig miteinander abschließen, wobei die Schächte je einen Schachthohlraum 4, 5 und eine den jeweiligen Schachthohlraum 4, 5 begrenzende Mantelwandung 6, 7 besitzen. Die Schächte 2, 3 müssen hierbei nicht zylindrisch im Querschnitt ausgebildet sein, eine ovale, D-förmige, viereckige oder sechs-, acht- oder mehreckige Ausbildung im Querschnitt ist nach der Erfindung ebenso umfasst.

Die Mantelwandungen 6, 7 sind hierbei bezüglich ihrer radialen Ausdehnung mehrschichtig ausgebildet, und jede Schicht übernimmt dabei eine bestimmte Aufgabe. Die äußere Schicht ist eine Stahlwand, die das tragende statische Element des Schachtes darstellt. Die Innenseite der Mantelwandung 6, 7 besteht aus Feuerfestmaterial. Die feuerseitige Innenschicht 8, 9 besteht aus dem sogenannten Arbeitsfutter, das den Schutz gegen den mechanischen Abrieb zur bewegten Steinsäule des Brenngutes übernimmt, und aus der mehrschichtigen Hintermauerung, die die Aufgabe der Wärmeisolierung hat, um die Prozesswärme weitgehend im Ofen zu halten.

Die Schächte 2, 3 besitzen zudem Brennerlanzenanordnungen 10, 11, die im Bereich einer oberen Öffnung 12, 13 in den Schacht axial hineinragen. Mit den Brennerlanzen 10, 11 kann gasförmiger, partikelförmiger Brennstoff mit entsprechender Transportluft oder flüssiger Brennstoff in das Innere eines jeden Schachtes 2, 3 eingebracht und insbesondere eingeblasen, eingedüst oder in sonstiger Weise eingebracht werden.

Durch die jeweils obere Öffnung 12, 13 der Schächte 2, 3 wird zudem das stückige, mineralische Gut, insbesondere Kalkstein, mittels Aufgabesystem zugeführt. Das stückige Gut besitzt eine Kornverteilung mit Unter- und Überkorn, wobei sich diese während der Verweilzeit im Ofen je nach Beschaffenheit des Brenngutes und den Bedingungen im Ofeninneren verändern kann. Durch die unteren Öffnungen 14, 15 der Schächte 2, 3 wird das gebrannte Kalkprodukt aus dem Ofen abgeführt. Durch die oberen Öffnungen 12, 13 wird zudem durch die entsprechende Schüttung aus stückigem, mineralischen Gut die notwendige Verbrennungsluft entsprechend der Strömungsrichtung 16 unter Druck zugeführt, wobei durch die untere Öffnung 14 oder über Austragsorgane 14 Kühlluft entsprechend der Strömungsrichtung 17 per Gebläse in die Kühlzone gelangt.

Um die beiden Schächte 2, 3 zu einem Gegenstrom-Gleichstrom-Regenerativofen zu kombinieren, sind um die Schächte 2, 3 bzw. die Mantelwandungen 6, 7 herum Ringkanäle 18, 19 angeordnet. Die Ringkanäle 18, 19 weisen dabei beispielsweise einen runden oder länglichovalen Querschnitt auf und sind wulstartig um die Schächte 2, 3 herum angeordnet. In jedem Schachthohlraum 4, 5 sind Öffnungen oder Durchbrechungen 20 in den Mantelwandungen 6, 7 und somit auch in der Stahlwand angeordnet, die zu einer Außenseite führen.

Die Ringkanäle 18, 19 können mit ihrer Umfangswandung 21 von der Hülle oder der äußeren Schicht der Mantelwandungen 6, 7 mit einem Abstand 22 angeordnet sein, wobei die Ringkanäle 18, 19 in diesem Fall zumindest im Bereich der Durchbrechungen mit die Durchbrechungen 20 verlängernden Kanälen 23 ausgebildet sind.

Insbesondere besitzen die Ringkanäle und die Kanäle 23 oder Stutzen 23 eine eigene Tragstruktur, so dass sie kein Bestandteil der Tragstruktur der Ofenmauerung sind. Sie können aber mit ihren metallischen Hüllen an der Stahlhülle der Schächte angeordnet sein.

Die Schächte 2, 3 verfügen weder innen noch außen über Pfeilmauerwerke oder integral angemauerte Kammern oder angemauerte Überströmkanäle. Die außen angesetzten Abgaskanäle sind separate Bauteile, die sich nicht auf dem Ofenmauerwerk abstützen oder das Ofenmauerwerk in anderer Weise belasten. Sehr wohl sind diese Überströmkanäle gegebenenfalls mit einem feuerfesten Futter versehen und auch mit dem zylindrischen Stahlmantel der Ofenschächte verbunden, wobei gegebenenfalls Dichtungen zwischen den außen angesetzten Kanälen und den Schächten vorhanden sind.

Die Kanäle und Abgaskanäle können außen über eine eigene Tragstruktur verfügen so dass sie völlig unabhängig vom Ofen stehen.

Die Durchbrechungen 20 sind von der innersten Fläche der Ofenmauerung bis zum Stahlmantel außen durchgehend ausgebildet und sind insbesondere als einfache quadratische, rechteckige, ovale oder runde Durchbrechungen ausgebildet, welche die Statik des Ofens nicht weiter beeinflusst und insbesondere es nicht erfordert, dass die Tragstrukturen, Pfeiler oder dergleichen mit eingemauert werden müssen. Dies vereinfacht den Aufbau des Ofens gegenüber allen bekannten Öfen ganz wesentlich.

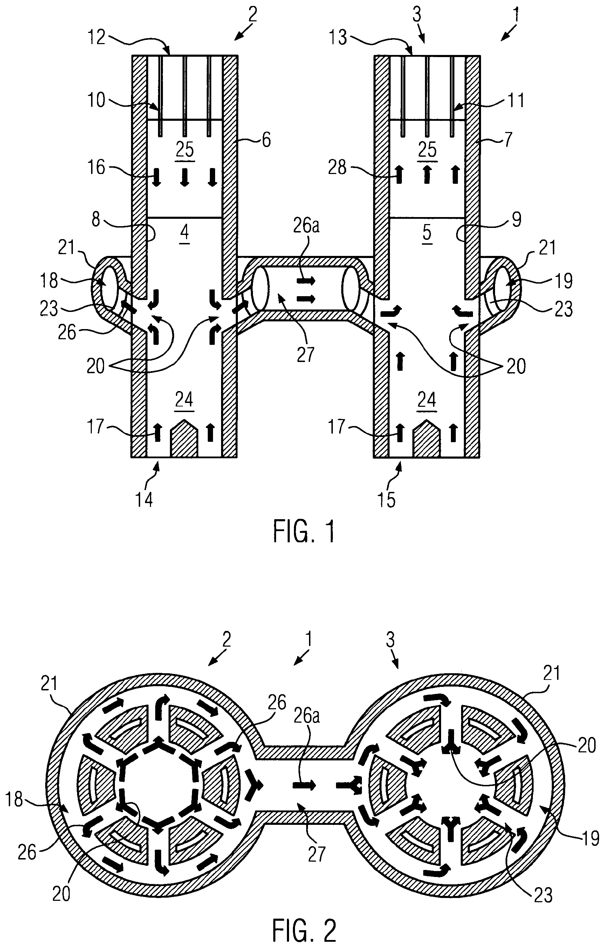

Die Durchbrechungen 20 sind im Grenzbereich zwischen der Kühlzone 24 des jeweiligen Schachts 2, 3 und der Brennzone 25 des jeweiligen Schachts 2, 3 angeordnet, wobei in der Kühlzone 24 entsprechend der Strömungsrichtung 17 die Kühlluft durch das gebrannte Kalkprodukt hindurch strömt und kühlt und in der Brennzone 25 die Brennluft bzw. die Brenngase entsprechend der Strömungsrichtung 16 durch die thermisch zu behandelnde Kalk-/Kalksteinschüttung hindurch strömt. Im Bereich der Durchbrechungen 20 vermischen sich die Kühlluft und die Prozessabgase und gelangen entsprechend der Strömungsrichtung 26 durch die Durchbrechungen 20 und, so vorhanden, durch die Kanäle 23 in die Ringkanäle 18, 19. Um die Schächte 2, 3 miteinander zu verbinden, ist bei einer Ausführung (Figur 1, Figur 2) ein Überströmkanal 27 vorhanden, welcher die Ringkanäle 18, 19 in dem Bereich, in dem sich die beiden Schächte 2, 3 am nächsten sind, miteinander verbindet.

Da die Durchbrechungen 20 einerseits und die Ringkanäle bzw. deren Zuführstutzen 23 andererseits nicht integral ausgebildet sind und insbesondere nicht miteinander als Mauerwerk ausgebildet sind, kann in dem Bereich, in dem die Kanäle an den Ofen angesetzt sind, eine entsprechende Dichtungsanordnung vorhanden sein, um das gasdichte Überströmen aus der Durchbrechung 20 in den Kanal sicherzustellen. Darüber hinaus ist es möglich, die Kanäle mit z. B. feuerfesten Rohrstutzen ein Stück in die Durchbrechungen einzuführen.

Die Kanäle 23 bzw. Ringkanäle 18, 19 können bezüglich der Kühlzone 24 leicht schräg zur Brennzone 25 hin verschoben angeordnet sein, so dass die Strömungsrichtung 26 der Mischgase von den Durchbrechungen 20 in die Ringkanäle 18, 19 leicht aufsteigend ist.

Die Mischgase strömen entsprechend der Strömungsrichtung 26a durch den Überströmkanal 27 in den Schacht 2, vereinigen sich mit der durch die untere Öffnung 15 durch Gebläse entsprechend der Strömungsrichtung 17 zugeführte Kalkkühlluft sowie mit der Lanzenkühlluft am unteren Ende der Lanzen 11 und steigen entsprechend der Strömungsrichtung 28 im Schacht 2 auf und durchwärmen so den im Schacht 2 befindlichen Kalkstein bzw. das stückige, mineralische Material im Bereich der Lanzen 11.

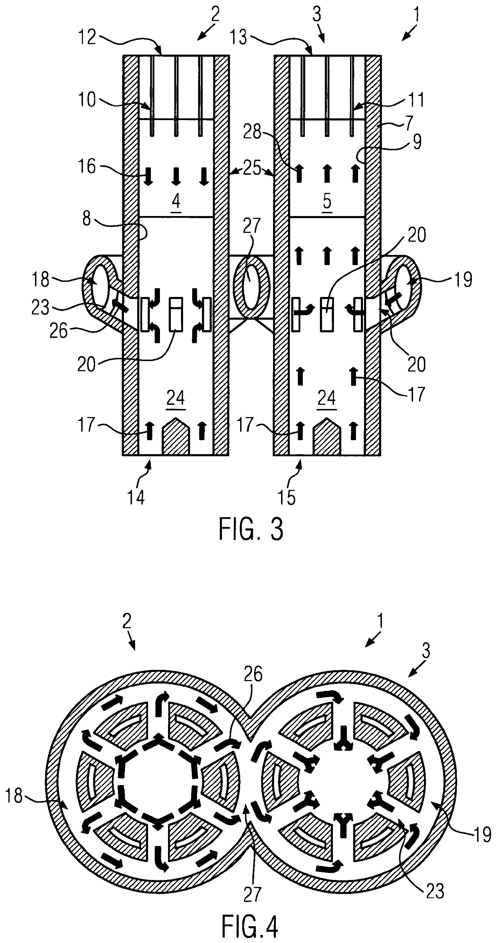

Bei einer weiteren vorteilhaften Ausführungsform (Figuren 3, 4) sind die Schächte 2, 3 mit ihren Mantelwandungen 6, 7 so nah aneinander angeordnet, dass der Überströmkanal 27 quasi durch ein Ineinanderlaufen der beiden Ringkanäle 18, 19 gebildet wird, wobei die beiden Ringkanäle 18, 19 ebenfalls einen beispielsweise ovalen Querschnitt haben und der Überströmkanal in dem Bereich der größten Annäherung der Schächte 2, 3 ebenfalls beispielsweise in gleicher Weise oval ausgebildet ist.

Hierdurch wird der Strömungsweg durch den Überströmkanal 27 sehr stark verkürzt.

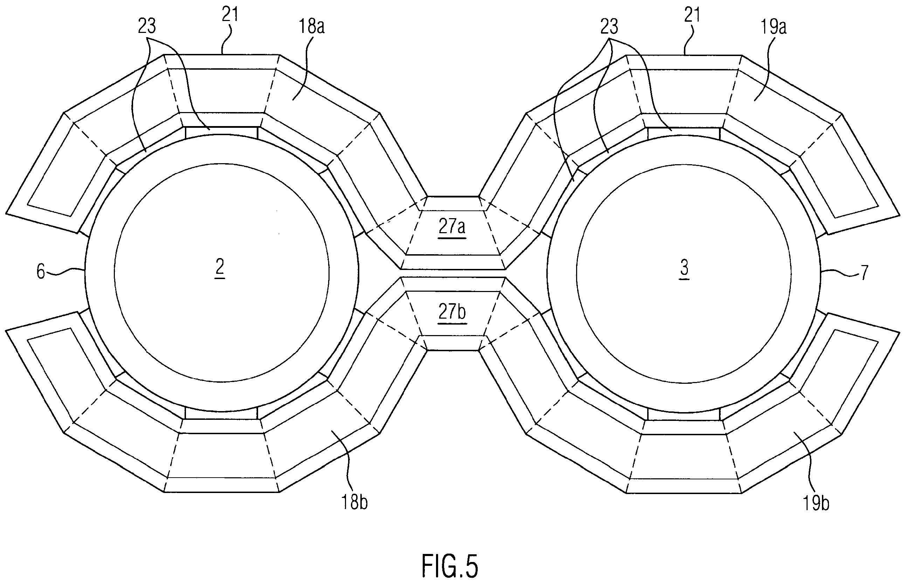

Bei einer weiteren vorteilhaften Ausführungsform (Figur 5) sind Ringkanäle 18, 19 nur in dem Bereich angeordnet, in dem sie wirklich benötigt werden, was bedeutet, dass in dem Überströmkanal diametral gegenüberliegenden Bereich der Ringkanal 18, 19 nicht geschlossen ist. Hierdurch entstehen je Schacht 2, 3 quasi zwei Halbringkanäle 18a, 18b, 19a, 19b.

Bei dieser Ausführungsform können zwei Überströmkanäle 27a, 27b vorhanden sein, welche jeweils als Fortsetzung des jeweiligen Ringkanals 18a, 18b ausgebildet sind und zwischen den Schächten 2, 3 parallel zueinander verlaufen und dann in den jeweiligen nächsten Ringkanal 18a, 19a, 19b übergehen. Diese Ausführungsform ist selbstverständlich auch bei einer Ausführung gemäß der Figuren 1, 2 oder der Figuren 3, 4 möglich.

Bei der Erfindung ist von Vorteil, dass die Schächte von der Aufgabezone bis zur Austragszone des Gutes durchgehend und insbesondere zylindrisch mit gleichem Ofenquerschnitt durchgehend ausgeführt sind. Dies senkt das spezifische Gewicht der Ausmauerung in Bezug auf die Ofenkapazität und verbessert die Ofenstatik wesentlich.

Insbesondere bei einer zylinderförmigen Ausbildung besitzt dies eine deutlich geringere mechanische Beanspruchung bezogen auf das Brenngut, z.B. was zu einer weitgehenderen Einhaltung der Fraktion des zugeführten Brenngutes führt, bezogen auf die Ausmauerung durch das Brenngut, wodurch die Lebenszeit der Ausmauerung erhöht wird.

Aus verfahrenstechnischer Sicht ist die Durchströmung der Gutschüttung mit Prozessgasen ungestört und wesentlich homogener.

Der Einbau von Sonderformaten in der feuerfesten Ausmauerung wird deutlich reduziert, was die Kosten pro Tonne feuerfesten Materials reduziert. Durch den Einsatz von Standardformaten wird die Verfügbarkeit der feuerfesten Materialien im Revisionsfall deutlich gesteigert.

Der Aufbau des Ofens ist erheblich leichter zu bewerkstelligen, da keine Pfeiler und ähnliche Tragstrukturen installiert werden müssen.

Der Wärmeverlust des erfindungsgemäßen Ofens ist deutlich geringer als beim klassischen GGR-Ofen.

Die Zugänge aus dem Ofen zu dem außen liegenden Ringkanal können im Querschnitt und in der Lage den Strömungsverhältnissen im Ofen angepasst und optimiert werden. Hierdurch wird die Gaszuführung in den Regenerativschacht optimiert und führt dort zu einer homogeneren Wärmeverteilung im Ofenquerschnitt. Die in dem zylindrischen Schachtmauerwerk angeordneten Öffnungen beeinflussen die Statik des Schachtmauerwerkes im Gegensatz zu Pfeilern nicht.

Der außen liegende Ringkanal kann zudem in Segmenten vorgefertigt werden und im Bedarfsfall partiell ausgetauscht werden, ohne ggf. den Ofen abfahren zu müssen. Hierbei kann die Innenauskleidung des Ringkanals auch aus Material gefertigt werden, was den Reinigungsbeanspruchungen, insbesondere bei Verwendung von Wasser besser standhält. Hierbei kann es sich um mineralische Ausmauerungen handeln, gegebenenfalls sind aber auch hochwarmfeste Metalle denkbar.

Zudem kann die Querschnittsgeometrie des Ringkanals strömungsmäßig so gestaltet werden, dass eine optimierte Durchmischung von Brennabgasen und Kalkkühlluft sichergestellt wird, wodurch die Neigung zur Staubablagerung durch Vermeidung von Strömungsschatten verringert wird, da die Strömung aufgrund der einheitlichen Geometrie eine Konstanz aufweist, was die Häufigkeit der Reinigung deutlich verringert.

Ferner können innerhalb des Ringkanals technische Maßnahmen integriert werden, um die Schadstoffemission des Ofens zu reduzieren, beispielsweise durch gezielte Zugabe von entsprechenden Medien oder Ingredienzien.

Durch den erheblich vereinfachten Aufbau werden auch die Kosten für notwendige Stahlbauarbeiten deutlich reduziert.

Darüber hinaus ergibt die erfindungsgemäße Anordnung von Ringkanälen auch die Möglichkeit, zwei herkömmliche, nebeneinander liegende Normalschachtöfen zu einem GGR-Ofen umzubauen.

Bei einer Ausführungsform ohne langen Überstromkanal, bei dem die Ringkanäle ineinander übergehen, ist von Vorteil, dass ein besonders kurzer Strömungsweg erreicht wird, insbesondere auch dann, wenn die Schächte 2, 3 z.B. aus Platzgründen sehr dicht aneinander gebaut werden müssen.

Bei der Ausführungsform, bei der zwei Überströmungskanäle vorhanden sind, welche im Querschnitt vorzugsweise wie die Ringkanäle 18, 19 ausgebildet sind und dementsprechend von einem Ringkanal 18 in den nächsten Ringkanal 19 im gleichen Querschnitt übergehen, ist von Vorteil, dass sich die Strömungsverhältnisse innerhalb des gesamten Kanalsystems hierdurch nicht ändern.

Nachfolgend wird kurz noch einmal das Verfahren erläutert.

Der GGR-Ofen besteht aus zwei baugleichen Schächten 2, 3, bei denen abwechselnd der eine Schacht als Brennschacht 2 und der andere als Regenerativschacht 3 genutzt wird. Beide Schächte 2, 3 sind mit einer Kalkstein-/Kalkschüttung gefüllt. Im Brennschacht 2 wird Verbrennungsluft unter Druck am Ofenkopf zugeführt und strömt entsprechend der Strömungsrichtung 16. Diese nimmt dann die Wärme auf, die in der vorherigen Zykluszeit (Funktion: entsprechend Regenerativschacht 3) frisch zugeführt und durch das Abgas vorgewärmt wurde. Über die Brennerlanzenanordnung 10 wird Brennstoff eingebracht. Am Ende dieser Lanzen 10 zündet dann der Brennstoff mit der Verbrennungsluft. Die Flamme steht im direkten Kontakt mit dem Brenngut, das durch die Prozessgase thermisch behandelt wird. Bei diesem Prozess wird Kalkstein zu Kalk unter Abscheidung von Kohlendioxidgas umgewandelt, das dann Bestandteil des Abgases ist, das im Gleichstrom (Richtung 16) mit der Kalkstein- / Kalkschüttung in diesem Fall nach unten strömt.

Am Ende der Brennzone 25 sind die Durchbrechungen 20 angeordnet, durch die das heiße Abgas in den Ringkanal 18 strömt. Gleichzeitig strömt von einer unteren Öffnung 14 Kühlluft entsprechend der Strömungsrichtung 17 nach oben und gelangt ebenfalls in den Bereich der Durchbrechungen 20 und somit in den Ringkanal 18, wo sich die Kalkkühlluft mit dem Abgas mischt. Entlang des Ringkanals 18 strömt dieses Gasgemisch in den Überströmkanal 27 und von dort über den Ringkanal 19 und über die Durchbrechungen 20 in den Regenerativschacht 3. Das in diesen Schacht einströmende Gas mischt sich mit der Kalkkühlluft, die über die untere Öffnung 15 über Gebläse zugeführt wird, und im Schachtraum 5 am unteren Ende der Lanzenanordnung 11 mit Lanzenkühlluft. Das in den Bereich der Lanzen 11 in Richtung 28 strömende Gasgemisch gibt dann seine fühlbare Wärme an die frisch zugeführte Kalksteinmenge während der Durchströmung ab. In der nächsten Zykluszeit (Funktion: entsprechend Brennschacht 2) kann diese Wärme dann wieder an die Verbrennungsluft wieder abgegeben werden. Dieser regenerative Vorgang führt letztendlich zu einer Energieeinsparung.

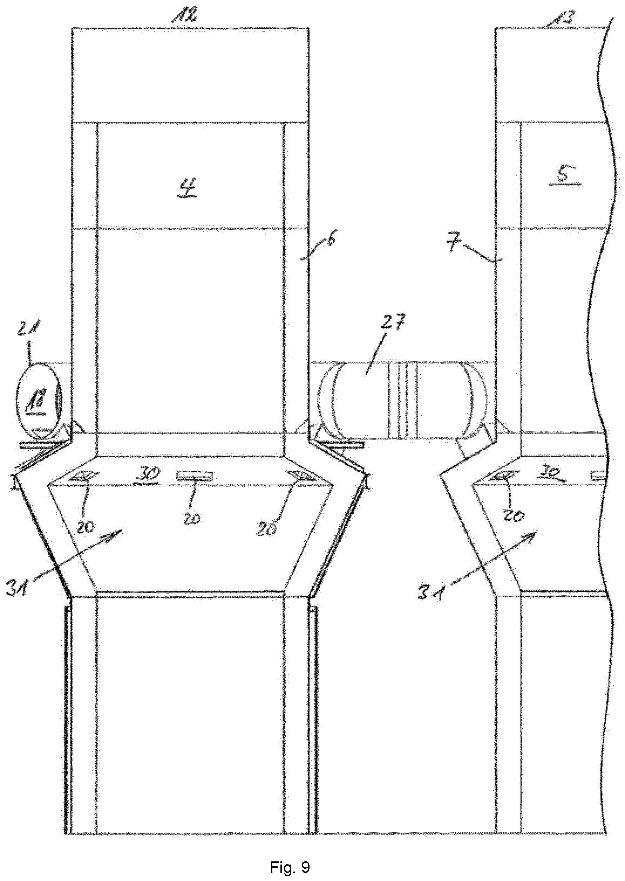

Bei einer weiteren vorteilhaften Ausführungsform (Figur 9) kann sich der Ofenquerschnitt oberhalb der Durchbrechungen 20 erweitern und darunter wieder konvergieren, so dass die Durchbrechungen 20 in einem schräg nach außen abfallenden Bereich 30 einer Erweiterung 31 angeordnet sind, so dass eine Verschmutzung durch hineindrückende Kalkschüttung vermieden wird.

### Bezugszeichenliste

- 1: Vorrichtung
- 2: Schacht
- 3: Schacht
- 4: Schachthohlraum
- 5: Schachthohlraum
- 6: Mantelwandung
- 7: Mantelwandung
- 8: feuerseitige Innenschicht
- 9: feierseitige Innenschicht
- 10: Brennerlanzenanordnung
- 11: Brennerlanzenanordnung
- 12: obere Öffnung
- 13: obere Öffnung
- 14: untere Öffnung/Austragorgane
- 15: untere Öffnung/Austragorgane
- 16: Strömungsrichtung
- 17: Strömungsrichtung
- 18: Ringkanal (18a, 18b Halbringkanal)
- 19: Ringkanal (19a, 19b Halbringkanal)
- 20: Durchbrechung
- 21: Umfangswandung
- 22: Abstand
- 23: Rohrstutzen
- 24: Kühlzone
- 25: Brennzone
- 26: Strömungsrichtung
- 27: Überströmkanal

- 30: abfallender Bereich
- 31: Erweiterung

## Patentansprüche

1. Vorrichtung zum thermischen Behandeln von mineralischem, stückigem Gut, insbesondere zum Brennen von Kalk, wobei die Vorrichtung zumindest zwei parallel zueinander angeordnete Schächte (2, 3) besitzt, wobei die Schächte von einem Schachteingang (12, 13) bis zu einem Austrag (14, 15) des stückigen Gutes mit einem durchgehenden Mantel (6, 7) ausgebildet sind, ohne innenliegende oder außenliegende Pfeilermauerwerke oder Kanalmauerwerke oder hängende Zylinder, wobei jeder der mindestens zwei Schächte (2, 3) zumindest einen von außen am Mantel direkt oder über Zuführstutzen (23) angesetzte Ringkanal (18, 19) besitzt, wobei die Ringkanäle (18, 19) außerhalb des Schachtmauerwerks angeordnet sind und keine tragende gemauerte Verbindung zum Schachtmauerwerk besitzen und kein integraler Bestandteil des Brenn- oder Regenerativschachtes sind, wobei die Ringkanäle (18, 19) der zumindest zwei Schächte (2, 3) miteinander in gasführender Verbindung stehen, wobei im Bereich der Ringkanäle (18, 19) Durchbrechungen (20) vom Innenraum der Schächte (2, 3) zu einer Außenseite vorhanden sind und die Ringkanäle (18, 19) mit den Durchbrechungen (20) in gasführender Verbindung sich befinden.

2. Vorrichtung nach Anspruch 1, **dadurch gekennzeichnet, dass** im Bereich der Durchbrechungen (20) zwischen den Mantelwandungen (6, 7) und den Ringkanälen (18, 19) oder den die Ringkanäle (18, 19) und die Durchbrechungen (20) verbindenden Rohrstutzen (23) je Dichtungen zum gasdichten Abdichten vorhanden sind.

3. Vorrichtung nach einem der vorhergehenden Ansprüche, **dadurch gekennzeichnet, dass** die Ringkanäle (18, 19) und/oder die Rohrstutzen (23) und/oder die Überströmkanäle (27) einen äußeren Mantel aus einem Metall, Stahl oder Aluminium besitzen und/oder aus einem hochwarmfesten Metall ausgebildet sind oder eine innere Auskleidung aus einem feuerfesten Material besitzen, wobei die metallischen Mäntel der Ringkanäle (18, 19) oder der Rohrstutzen (23) mit dem metallischen Außenmantel der Schächte (2, 3) verschraubt, vernietet oder verschweißt sind, oder sich eine metallische Tragstruktur der Ringkanäle an dem metallischen Außenmantel abstützt und mit diesem verbunden ist.

4. Vorrichtung nach einem der vorhergehenden Ansprüche, **dadurch gekennzeichnet, dass** die Ringkanäle (18, 19) direkt an der Mantelwandung (6, 7) außenseitig anliegen oder von dieser mit einem umlaufenden Ringsteg oder mit umlaufenden Abstandsstegen beabstandet sind, wobei die Durchbrechungen (20) in dem umlaufenden Ringsteg oder den Abstandsstegen vorhanden sind, sodass eine Verbindung vom Innenraum der Schächte (2, 3) zu den Ringkanälen (18, 19) besteht.

5. Vorrichtung nach einem der vorhergehenden Ansprüche, **dadurch gekennzeichnet, dass** die Vorrichtung ein Gleichstrom-Gegenstrom-Regenerativofen zum Brennen von stückigem Kalkstein, dolomitischem Kalkstein oder Dolomit ist.

6. Vorrichtung nach einem der vorhergehenden Ansprüche, **dadurch gekennzeichnet, dass** die Ringkanäle (18, 19) über zumindest einen Überstromkanal (27) miteinander in Verbindung stehen, wobei der Überströmkanal (27) durch die Seitenwandungen der Ringkanäle (18, 19) bzw. Durchbrechungen in denselben ausgebildet wird oder bei einer Beabstandung der Ringkanäle (18, 19) voneinander sich zwischen den Ringkanälen als Hohlkanal erstreckt, wobei die Innenräume der Ringkanäle (18, 19) in den Überströmkanal (27) münden.

7. Vorrichtung nach einem der vorhergehenden Ansprüche, **dadurch gekennzeichnet, dass** zwei oder mehr Überströmkanäle (27) vorhanden sind.

8. Vorrichtung nach einem der vorhergehenden Ansprüche, **dadurch gekennzeichnet, dass** die Ringkanäle (18a, 18b, 19a, 19b) nur über einen Teilumfang an den Mantelwandungen (6, 7) angeordnet sind, wobei zwei Überströmkanäle (27a, 27b) vorhanden sind, welche jeweils eine Fortsetzung des jeweiligen Ringkanals (18a, 18b) ausbilden und zwischen den Schächten (2, 3) parallel zueinander verlaufen und in den jeweiligen nächsten Ringkanal (19a, 19b) des benachbarten Schachts (2, 3) übergehen.

9. Vorrichtung nach Anspruch 8, **dadurch gekennzeichnet, dass** die Überströmkanäle (27a, 27b) baulich und vom Querschnitt her den Ringkanälen (18, 19) entsprechen.

10. Vorrichtung nach einem der vorhergehenden Ansprüche, **dadurch gekennzeichnet, dass** die Schächte (2, 3) mit ihrer Längserstreckung parallel zueinander und vertikal ausgerichtet, ausgebildet sind, wobei obere Öffnungen (12, 13) bzw. Aufgabebereiche der Schächte (2, 3) und untere Öffnungen (14, 15) bzw. Austragsbereiche der Schächte (2, 3) auf einer Höhe miteinander angeordnet sind, wobei die Mantelwandungen (6, 7) bezüglich ihrer radialen Ausdehnung ein- oder mehrschichtig ausgebildet sind, wobei zumindest eine feuerfeste feuerseitige Innenschicht (8, 9) vorhanden ist und die Schächte nach außen zumindest von einer äußeren Hülle begrenzt werden, wobei zwischen der Hülle und der feuerfesten Innenschicht (8, 9) weitere Schichten angeordnet sind, wobei die Schächte (2, 3) Brennerlanzenanordnungen (10, 11) besitzen, die im Bereich einer oberen Öffnung (12, 13) in den Schacht axial hineinragen, wobei durch die jeweils oberen Öffnungen (12, 13) das stückige mineralische Gut aufgegeben wird und durch die unteren Öffnungen (14, 15) bzw. Austragsbereiche der Schächte (2, 3) der gebrannte Kalk abgeführt wird, wobei die Ringkanäle (18, 19) wulstartig um die Mantelwandungen (6, 7) der Schächte (2, 3) herum angeordnet sind.

11. Vorrichtung nach einem der vorhergehenden Ansprüche, **dadurch gekennzeichnet, dass** die Ringkanäle (18, 19) einen runden oder länglich ovalen Querschnitt aufweisen.

12. Vorrichtung nach einem der vorhergehenden Ansprüche, **dadurch gekennzeichnet, dass** die Ringkanäle aus keramischem Material gemauert oder gegossen sind oder aus einem hochwarmfesten Stahl ausgebildet sind oder eine metallische Hülle und eine keramische feuerfeste Innenbeschichtung besitzen.

13. Vorrichtung nach einem der vorhergehenden Ansprüche, **dadurch gekennzeichnet, dass** die Ringkanäle (18, 19) mit ihrer Umfangswandung (21) von der Hülle oder der äußeren Schicht der Mantelwandung (6, 7) mit einem Abstand (22) angeordnet sind, wobei die Ringkanäle (18, 19) zumindest im Bereich der Durchbrechungen (20) mit die Durchbrechungen (20) verlängernden Kanälen (23) oder einem entsprechenden, den Abstand einstellenden umlaufenden Ringkanal ausgebildet sind.

14. Vorrichtung nach einem der vorhergehenden Ansprüche, **dadurch gekennzeichnet, dass** die Durchbrechungen (20) im Grenzbereich zwischen der Kühlzone (24) des Schachts bzw. des Ofens und der Brennzone (25) angeordnet sind, wobei die Kühlzone derart ausgebildet ist, dass entsprechend einer Strömungsrichtung (17) Kühlluft durch den gebrannten Kalk hindurchströmt und in der Brennzone (25) die Brennluft bzw. die Brenngase entsprechend der Strömungsrichtung (16) durch den thermisch behandelten Kalk hindurchströmen, wobei im Bereich der Durchbrechungen (20) die Kühlluft und die Brenngase sich vermischend entsprechend der Strömungsrichtung (26) durch die Durchbrechungen (20) durchgeleitet werden.

15. Vorrichtung nach einem der vorhergehenden Ansprüche, **dadurch gekennzeichnet, dass** die Kanäle (23) bzw. die Ringkanäle (18, 19) bezüglich der Kühlzone (24) leicht zur Brennzone (25) bzw. zu oberen Öffnungen (12, 13) axial verschoben angeordnet sind, sodass die Strömungsrichtung (26) der Mischgase von den Durchbrechungen (20) in die Ringkanäle (18, 19) aufsteigend angeordnet ist.

16. Vorrichtung nach einem der vorhergehenden Ansprüche, **dadurch gekennzeichnet, dass** sich der Ofenquerschnitt oberhalb der Durchbrechungen (20) erweitert und darunter konvergiert, so dass die Durchbrechungen (20) in einem schräg nach außen abfallenden Bereich (30) einer so gebildeten Erweiterung (31) angeordnet sind.

17. Verfahren zum Betreiben einer Vorrichtung nach Anspruch 1 zum thermischen Behandeln von mineralischem, stückigem Gut, insbesondere zum Betreiben eines Gleichstrom-Gegenstrom-Regenerativofen zum Brennen von Kalkstein, dolomitischem Kalkstein, Dolomit mit zumindest zwei Schächten, wobei die Schächte (2, 3) mit stückigem Kalkstein-/Kalkschüttung gefüllt sind und in einem ersten Schacht (2) über die Brennerlanzenanordnung (10) Brennstoff eingebracht, wobei Verbrennungsluft entsprechend der Strömungsrichtung (16) durch die obere Öffnung (12) des Schachts über Gebläse zugeführt wird und sich mit dem zu brennenden Gut bzw. dem Brennstoff aus der Brennerlanzenanordnung (10) im Gleichstrom durch das stückige Gut bewegt, wobei Brennstoff und Brennluft sich mischen und verbrennen und die entsprechende Prozesswärme für den Umwandlungsprozess von Kalkstein zu Kalk unter Abscheidung von Kohlendioxid zur Verfügung gestellt wird, das vom Abgas aufgenommen wird, wobei am Ende einer Brennzone (25) die Durchbrechungen (20) in den Mantelwandungen (6, 7) angeordnet sind und die heißen Abgase durch die Durchbrechungen (20) und gegebenenfalls vorhandene Kanäle (23) in den Ringkanal (18) geführt wird, wobei von einer unteren Öffnung (14) bzw. einer Austragsöffnung (14) des Schachts (2) Kühlluft entsprechend der Strömungsrichtung (17) nach oben zugeführt wird und im Bereich der Durchbrechungen (20) ebenso in den Ringkanal (18) geführt wird, wobei sich die Kühlluft mit der Brennluft bzw. dem Abgas mischt und wobei entlang des Ringkanals (18) das Gasgemisch in den Überströmkanal (27) und von dort über den Ringkanal (19) und den Öffnungen (20) in den Schacht (3) strömt, wobei das Abgas aus den Öffnungen (20) sich mit Kalkkühlluft über untere Öffnung (15) bzw. einer Austragsöffnung (15) des Schachts (3) und mit der Lanzenkühlluft am Ende der Lanzen (11) mischt und von dort im Gegenstrom gegen den Materialfluss des mineralischen stückigen Guts nach oben strömt und hierbei seine Wärmeenergie an das mineralische stückige Gut abgibt, wobei nach einer vorbestimmten Zeit die Prozesse in den Schächten (2, 3) beendet und anschließend umgekehrt werden, sodass im Schacht (3) der Kalk gebrannt wird und im Schacht (2) nach dem Austrag eine frische Kalksteinmenge zugeführt und in entsprechender Weise vorgewärmt wird.

## Claims

1. Device for the thermal treatment of mineral material in lump form, in particular for burning lime, wherein the device has at least two shafts (2, 3) arranged parallel to one another, wherein the shafts are designed with a continuous casing (6, 7) from a shaft inlet (12, 13) to a discharge (14, 15) of the material in lump form, without internal or external pillar masonry or channel masonry or suspended cylinders, wherein each of the at least two shafts (2, 3) has at least one annular channel (18, 19) fitted straight onto the casing or via supply connections (23) from outside, wherein the annular channels (18, 19) are arranged outside the shaft masonry and have no supporting, brick-built common connection to the shaft masonry and are not an integral part of the combustion or regenerative shaft, wherein the annular channels (18, 19) of the at least two shafts (2, 3) have a gas-conducting connection to one another, wherein in the region of the annular channels (18, 19) there are through-holes (20) from the interior of the shafts (2, 3) to an outer side and the annular channels (18, 19) have a gas-conducting connection to the through-holes (20).

2. Device according to Claim 1, **characterized in that** there are seals for gastight sealing in the region of the through-holes (20) between the casing walls (6, 7) and the annular channels (18, 19) or the pipe connections (23) connecting the annular channels (18, 19) and the through-holes (20).

3. Device according to one of the preceding claims, **characterized in that** the annular channels (18, 19) and/or the pipe connections (23) and/or the overflow channels (27) have an outer casing made of a metal, steel or aluminium and/or are formed from a highly heat-resistant metal or have an inner lining made of a refractory material, wherein the metal casings of the annular channels (18, 19) or of the pipe connections (23) are screwed, riveted or welded to the metal outer casing of the shafts (2, 3), or a metal supporting structure of the annular channels rests against the metal outer casing and is connected thereto.

4. Device according to one of the preceding claims, **characterized in that** the annular channels (18, 19) rest directly against the casing wall (6, 7) on the outside or are spaced apart therefrom with a circumferential annular web or with circumferential spacing webs, wherein the through-holes (20) are present in the circumferential annular web or the spacing webs, so that there is a connection from the interior of the shafts (2, 3) to the annular channels (18, 19).

5. Device according to one of the preceding claims, **characterized in that** the device is a cocurrent/counter-current regenerative furnace for burning limestone, dolomitic limestone or dolomite in lump form.

6. Device according to one of the preceding claims, **characterized in that** the annular channels (18, 19) are connected to one another via at least one overflow channel (27), wherein the overflow channel (27) is formed by the side walls of the annular channels (18, 19) or by through-holes therein, or when the annular channels (18, 19) are spaced apart from one another, extends as a hollow channel between said annular channels, wherein the interiors of the annular channels (18, 19) open out into the overflow channel (27).

7. Device according to one of the preceding claims, **characterized in that** two or more overflow channels (27) are present.

8. Device according to one of the preceding claims, **characterized in that** the annular channels (18a, 18b, 19a, 19b) are only arranged on the casing walls (6, 7) over a partial circumference, wherein there are two overflow channels (27a, 27b) which each form a continuation of the respective annular channel (18a, 18b) and run parallel to one another between the shafts (2, 3) and merge into the next annular channel (19a, 19b) of the adjacent shaft (2, 3) in each case.

9. Device according to Claim 8, **characterized in that** the overflow channels (27a, 27b) correspond to the annular channels (18, 19) structurally and in terms of the cross section.

10. Device according to one of the preceding claims, **characterized in that** the shafts (2, 3) are configured with their longitudinal extents parallel to one another and vertically aligned, wherein upper openings (12, 13) or feed regions of the shafts (2, 3) and lower openings (14, 15) or discharge regions of the shafts (2, 3) are arranged level with one another, wherein the casing walls (6, 7) have a single or multi-layer design with respect to their radial extent, wherein there is at least one fire-side refractory inner layer (8, 9) and the shafts are outwardly delimited at least by an outer sleeve, wherein further layers are arranged between the sleeve and the refractory inner layer (8, 9), wherein the shafts (2, 3) have burner lance arrangements (10, 11) which project axially into the shaft in the region of an upper opening (12, 13), wherein the mineral product in lump form is fed through the upper openings (12, 13) in each case and the burnt lime is removed through the lower openings (14, 15) or discharge regions of the shafts (2, 3), wherein the annular channels (18, 19) are arranged about the casing walls (6, 7) of the shafts (2, 3) in a bead-like manner.

11. Device according to one of the preceding claims, **characterized in that** the annular channels (18, 19) have a round or elongate oval cross section.

12. Device according to one of the preceding claims, **characterized in that** the annular channels are built from ceramic material or cast or are formed from a highly heat-resistant steel or have a metal sleeve and a ceramic refractory inner coating.

13. Device according to one of the preceding claims, **characterized in that** the annular channels (18, 19) are arranged with their circumferential wall (21) at a distance (22) from the sleeve or the outer layer of the casing wall (6,7), wherein the annular channels (18, 19) are formed at least in the region of the through-holes (20) with channels (23) extending the through-holes (20) or a corresponding circumferential annular channel setting the spacing.

14. Device according to one of the preceding claims, **characterized in that** the through-holes (20) are arranged in the boundary region between the cooling zone (24) of the shaft or furnace and the burning zone (25), wherein the cooling zone is formed in such a manner that cooling air flows through the burnt lime in accordance with a flow direction (17) and in the burning zone (25) the combustion air or the combustion gases flow through the thermally treated lime in accordance with the flow direction (16), wherein in the region of the through-holes (20), the cooling air and the combustion gases are conducted through the through-holes (20) in accordance with the flow direction (26) such that they become mixed.

15. Device according to one of the preceding claims, **characterized in that** the channels (23) or the annular channels (18, 19) are arranged in relation to the cooling zone (24) so as to be easily axially displaced relative to the burning zone (25) or upper openings (12, 13), so that the flow direction (26) of the mixed gases is arranged rising from the through-holes (20) into the annular channels (18, 19).

16. Device according to one of the preceding claims, **characterized in that** the furnace cross section is widened above the through-holes (20) and converges beneath them, so that the through-holes (20) are arranged in a region (30) of a widened portion (31) formed in this way dropping at an angle outwards.

17. Method for operating a device according to Claim 1 for the thermal treatment of mineral material in lump form, in particular for the operation of a co-current/counter-current regenerative furnace for burning limestone, dolomitic limestone, dolomite, with at least two shafts, wherein the shafts (2, 3) are filled with limestone in lump form/bulk lime and fuel is introduced in a first shaft (2) via the burner lance arrangement (10), wherein combustion air is supplied in accordance with the flow direction (16) through the upper opening (12) of the shaft via fans and moves with the material being burnt or the fuel from the burner lance arrangement (10) in cocurrent flow through the material in lump form, wherein fuel and combustion air are mixed and burn and the corresponding process heat is made available for the process of conversion from limestone to lime with the separation of carbon dioxide, which is taken up by the flue gas, wherein at the end of a burning zone (25) the through-holes (20) are arranged in the casing walls (6, 7) and the hot flue gases are conducted through the through-holes (20) and channels (23) which are optionally present into the annular channel (18), wherein cooling air is supplied upwards in accordance with the flow direction (17) from a lower opening (14) or a discharge opening (14) of the shaft (2) and likewise conducted into the annular channel (18) in the region of the through-holes (20), wherein the cooling air mixes with the combustion air or the flue gas and wherein the gas mixture flows along the annular channel (18) into the overflow channel (27) and from there via the annular channel (19) and the openings (20) into the shaft (3), wherein the flue gas from the openings (20) mixes with lime cooling air via a lower opening (15) or a discharge opening (15) of the shaft (3) and with the lance cooling air at the end of the lances (11) and flows upwards from there in counter-current flow against the material flow of the mineral material in lump form and in so doing delivers its thermal energy to the mineral material in lump form, wherein after a predetermined time the processes in the shafts (2, 3) are terminated and then reversed, so that the lime is burnt in the shaft (3) and a fresh quantity of limestone is supplied to the shaft (2) following discharge and pre-heated in a corresponding manner.

## Revendications

1. Dispositif pour le traitement thermique de matières minérales en morceaux, en particulier pour la calcination de la chaux, le dispositif possédant au moins deux puits (2, 3) disposés parallèlement l'un à l'autre, les puits allant d'une entrée de puits (12, 13) jusqu'à une sortie (14, 15) de la matière en morceaux avec une enveloppe continue (6, 7), sans maçonnerie de piliers ou maçonnerie de canaux intérieurs ou extérieurs ou cylindres suspendus, chacun des au moins deux puits (2, 3) comportant au moins un canal annulaire (18, 19) rapporté de l'extérieur sur l'enveloppe, directement ou par l'intermédiaire de tubulures d'alimentation (23), les canaux annulaires (18, 19) étant disposés à l'extérieur de la maçonnerie du puits et ne possédant pas de liaison maçonnée porteuse avec la maçonnerie du puits et ne faisant pas partie intégrante du puits de combustion ou de régénération, les canaux annulaires (18, 19) des au moins deux puits (2, 3) sont en communication gazeuse l'un avec l'autre, des passages (20) étant prévus dans la zone des canaux annulaires (18, 19) depuis l'intérieur des puits (2, 3) vers un côté extérieur et les canaux annulaires (18, 19) étant en communication gazeuse avec les passages (20).

2. Dispositif selon la revendication 1, **caractérisé en ce que** dans la zone des passages (20) entre les parois d'enveloppe (6, 7) et les canaux annulaires (18, 19) ou les raccords de tubulures (23) reliant les canaux annulaires (18, 19) et les passages (20), des joints d'étanchéité sont respectivement présents pour assurer l'étanchéité au gaz.

3. Dispositif selon l'une des revendications précédentes, **caractérisé en ce que** les canaux annulaires (18, 19) et/ou les raccords de tubulures (23) et/ou les canaux de débordement (27) possèdent une enveloppe extérieure en un métal, en acier ou en aluminium et/ou sont réalisés en un métal résistant aux hautes températures ou possèdent un revêtement intérieur en un matériau réfractaire, les enveloppes métalliques des canaux annulaires (18, 19) ou des raccords de tubulures (23) étant vissées, rivetées ou soudées à l'enveloppe extérieure métallique des puits (2, 3), ou une structure porteuse métallique des canaux annulaires s'appuyant sur l'enveloppe extérieure métallique et étant reliée à celle-ci.

4. Dispositif selon l'une des revendications précédentes, **caractérisé en ce que** les canaux annulaires (18, 19) s'appliquent directement contre la paroi d'enveloppe (6, 7) du côté extérieur ou sont espacés de celle-ci par une nervure annulaire périphérique ou par des nervures d'espacement périphériques, les passages (20) étant présents dans la nervure annulaire périphérique ou dans les nervures d'espacement, de sorte qu'il existe une liaison de l'intérieur des puits (2, 3) vers les canaux annulaires (18, 19).

5. Dispositif selon l'une quelconque des revendications précédentes, **caractérisé en ce que** le dispositif est un four régénérateur à courant continu et à contre-courant pour la cuisson de calcaire en morceaux, de calcaire dolomitique ou de dolomie.

6. Dispositif selon l'une des revendications précédentes, **caractérisé en ce que** les canaux annulaires (18, 19) communiquent entre eux par au moins un canal de débordement (27), le canal de débordement (27) étant formé par les parois latérales des canaux annulaires (18, 19) ou par des ouvertures dans celles-ci, ou s'étendant entre les canaux annulaires en tant que canal creux lorsque les canaux annulaires (18, 19) sont espacés les uns des autres, les espaces intérieurs des canaux annulaires (18, 19) débouchant dans le canal de débordement (27).

7. Dispositif selon l'une des revendications précédentes, **caractérisé en ce qu'**il existe deux ou plusieurs canaux de débordement (27).

8. Dispositif selon l'une des revendications précédentes, **caractérisé en ce que** les canaux annulaires (18a, 18b, 19a, 19b) ne sont disposés sur les parois d'enveloppe (6, 7) que sur une partie de leur périphérie, deux canaux de débordement (27a, 27b) étant présents, qui forment chacun un prolongement du canal annulaire respectif (18a, 18b) et s'étendent parallèlement l'un à l'autre entre les puits (2, 3) et se prolongent dans le canal annulaire respectif suivant (19a, 19b) du puits voisin (2, 3).

9. Dispositif selon la revendication 8, **caractérisé en ce que** les canaux de débordement (27a, 27b) correspondent aux canaux annulaires (18, 19) du point de vue de la construction et de la section transversale.

10. Dispositif selon l'une des revendications précédentes, **caractérisé en ce que** les puits (2, 3) sont réalisés avec leur extension longitudinale parallèlement l'un à l'autre et orientés verticalement, des ouvertures supérieures (12, 13) ou des zones d'alimentation des puits (2, 3) et des ouvertures inférieures (14, 15) ou des zones d'évacuation des puits (2, 3) étant disposées à une même hauteur l'une par rapport à l'autre, les parois d'enveloppe (6, 7) étant constituées d'une ou de plusieurs couches en ce qui concerne leur extension radiale, au moins une couche intérieure réfractaire (8, 9) étant présente du côté du feu et les puits étant délimités vers l'extérieur par au moins une enveloppe extérieure, d'autres couches étant disposées entre l'enveloppe et la couche intérieure réfractaire (8, 9), les puits (2, 3) possédant des ensembles de lances de brûleur (10, 11) qui pénètrent axialement dans le puits dans la zone d'une ouverture supérieure (12, 13), la matière minérale en morceaux étant chargée par les ouvertures supérieures respectives (12, 13) et évacuée par les ouvertures inférieures (14, 15) ou les zones d'évacuation des puits (2, 3) de la chaux calcinée, les canaux annulaires (18, 19) étant disposés en forme de bourrelet autour des parois d'enveloppe (6, 7) des puits (2, 3).

11. Dispositif selon l'une des revendications précédentes, **caractérisé en ce que** les canaux annulaires (18, 19) présentent une section transversale ronde ou ovale allongée.

12. Dispositif selon l'une des revendications précédentes, **caractérisé en ce que** les canaux annulaires sont maçonnés ou moulés en matériau céramique ou sont formés d'un acier résistant aux hautes températures ou possèdent une enveloppe métallique et un revêtement intérieur réfractaire en céramique.

13. Dispositif selon l'une des revendications précédentes, **caractérisé en ce que** les canaux annulaires (18, 19) sont disposés avec leur paroi périphérique (21) à une distance (22) de l'enveloppe ou de la couche extérieure de la paroi d'enveloppe (6, 7), les canaux annulaires (18, 19) étant formés au moins dans la zone des passages (20) avec des canaux (23) prolongeant les passages (20) ou un canal annulaire périphérique correspondant réglant la distance.

14. Dispositif selon l'une des revendications précédentes, **caractérisé en ce que** les passages (20) sont disposés dans la zone limite entre la zone de refroidissement (24) du puits ou du four et la zone de cuisson (25), la zone de refroidissement étant conçue de telle sorte que l'air de refroidissement s'écoule à travers la chaux vive conformément au sens d'écoulement (17) et dans la zone de cuisson (25), l'air de cuisson ou les gaz de cuisson s'écoulent à travers la chaux traitée thermiquement conformément au sens d'écoulement (16), l'air de refroidissement et les gaz de combustion étant guidés à travers les passages (20) dans la zone des passages (20) en se mélangeant conformément au sens d'écoulement (26).

15. Dispositif selon l'une des revendications précédentes, **caractérisé en ce que** les canaux (23) ou les canaux annulaires (18, 19) sont disposés de manière légèrement décalée axialement par rapport à la zone de refroidissement (24) par rapport à la zone de cuisson (25) ou aux ouvertures supérieures (12, 13), de sorte que le sens d'écoulement (26) des gaz mélangés est disposé de manière ascendante depuis les passages (20) dans les canaux annulaires (18, 19).

16. Dispositif selon l'une des revendications précédentes, **caractérisé en ce que** la section transversale du four s'élargit au-dessus des passages (20) et converge en dessous, de sorte que les passages (20) sont disposés dans une zone (30) inclinée vers l'extérieur d'un élargissement (31) ainsi formé.

17. Procédé d'exploitation d'un dispositif selon la revendication 1 pour le traitement thermique de matières minérales en morceaux, en particulier pour l'exploitation d'un four régénérateur à courant continu et à contre-courant pour la cuisson de calcaire, de calcaire dolomitique, de dolomite avec au moins deux puits, les puits (2, 3) étant remplis de calcaire en vrac/en morceaux et du combustible étant introduit dans un premier puits (2) par l'intermédiaire du dispositif de lances de brûleur (10), de l'air de combustion étant amené par des ventilateurs à travers l'ouverture supérieure (12) du puits, conformément au sens d'écoulement (16), et se déplace à contre-courant à travers la matière en morceaux avec le produit à brûler ou le combustible provenant de l'ensemble de lances de brûleur (10), le combustible et l'air de combustion se mélangeant et brûlant et la chaleur de processus correspondante étant mise à disposition pour le processus de transformation du calcaire en chaux avec séparation du dioxyde de carbone qui est absorbé par les gaz d'échappement, les passages (20) étant disposés dans les parois d'enveloppe (6, 7) à l'extrémité d'une zone de cuisson (25) et les gaz d'échappement chauds étant guidés dans le canal annulaire (18) à travers les passages (20) et les canaux (23) éventuellement présents, de l'air de refroidissement étant amené vers le haut à partir d'une ouverture inférieure (14) ou d'une ouverture d'évacuation (14) du puits (2), conformément au sens d'écoulement (17), et étant également guidé dans le canal annulaire (18) dans la zone des passages (20), l'air de refroidissement se mélangeant à l'air de combustion ou aux gaz d'échappement et le mélange de gaz s'écoulant le long du canal annulaire (18) dans le canal de débordement (27) et de là dans le puits (3) via le canal annulaire (19) et les passages (20), le gaz d'échappement provenant des passages (20) se mélangeant avec de l'air de refroidissement de chaux par l'ouverture inférieure (15) ou une ouverture d'évacuation (15) du puits (3) et avec l'air de refroidissement de lance à l'extrémité des lances (11) et s'écoulant de là vers le haut à contre-courant du flux de matériau de la matière minérale en morceaux et cédant ainsi son énergie thermique à la matière minérale en morceaux, après un temps prédéterminé, les processus dans les puits (2, 3) étant terminés et ensuite inversés, de sorte que dans le puits (3) la chaux est cuite et dans le puits (2), après l'évacuation, une quantité de chaux fraîche est amenée et préchauffée de manière correspondante.
